# EUROPÄISCHE PATENTANMELDUNG

(11) **EP 1 208 931 A1**
(43) Veröffentlichungstag der Anmeldung: **29.05.2002**
(21) Anmeldenummer: 01250388.4
(22) Anmeldetag: 06.11.2001
(51) Int. Cl.: B23D 33/02, B21C 47/34, B23D 19/04

(54) **Rotierende Schere und Verfahren zum Abtrennen des Vorderschopfes und Hinterschopfes vom laufenden Walzgut**

(30) Priorität: 15.11.2000 DE 10057716
(71) Anmelder: SMS Demag AG, 40237 Düsseldorf (DE)
(72) Erfinder: Panzer, Günter, 41372 Niederkrüchten (DE)
(74) Vertreter: Meissner, Peter E., Dipl.-Ing.

(57) **Zusammenfassung**

Die Erfindung betrift eine rotierende Schere zum Schopfen von schnelllaufendem Walzgut, insbesondere Draht, mit zwei um ihre Achse mit gleicher Drehzahl rotierenden, axial schneidenden Ringmessem, deren gegeneinander gerichtete Stirnschneidkanten beim Schnittvorgang sowohl bis auf den zum Abtrennen des Walzgutes erforderlichen Abstand zusammengeführt sind als auch auf spitzwinklig zueinander angeordneten Ebenen liegen, die sich in einer Linie schneiden, wobei das der Schere auf einer Führung mit jeweils einem fluchtend vor und hinter den Ringmessern angeordneten Führungsteil zu- und von dieser ablaufende Walzgut durch Änderung der Relativlage zwischen Walzgut und Schneidkörper entweder durch den für den schnittfreien Walzgutdurchgang freien Raum zwischen den Ringmessern oder in den durch den Greifwinkel festgelegten keilförmigen Schneidbereich der Ringmesser führbar ist. Erfindungsgemäß ist auch das hinter der Schere angeordnete Führungsteil schwenkbar angeordnet. Die schere kann durch Verstellung der Ringmesser geöffnet werden.

## Beschreibung

Die Erfindung betrifft eine rotierende Schere zum Schopfen von schnelllaufendem Walzgut gemäß dem Oberbegriff des Patentanspruchs 1, sowie ein Verfahren zum Abtrennen des Vorderschopfes und des Hinterschopfes vom laufendem Walzgut mittels einer Schere nach Patentanspruch 1.

Eine rotierende Schere der gattungsbildenden Art ist aus der DE-PS 16 27 270 bekannt.

Eine weitere Schere dieser Art zeigt die DE-OS 24 35 486, wobei hier die übliche Gesamtanlage auch gezeigt ist, die aus zwei hintereinander angeordneten Scheren besteht. Mittels der vorderen oder ersten Schere wird der Vorderschopf abgetrennt, während - nach dem Durchlauf des Walzgutes - der Hinterschopf dann von der zweiten Schere abgetrennt wird. Zur Ausführung der Schnittbewegung sind jeweils die vor den Scheren angeordneten Führungen schwenkbar gelagert, d.h. deren der Schere zugewandtes Ende ist - bezogen auf die jeweilige ortsfest angeordnete Schere - heb- und senkbar. Damit kann das Walzgut in den Schneidbereich der Ringmesser gebracht werden, wobei hierzu die vor der Schere angeordnete Führung nach oben geschwenkt wird.
Zur Aufnahme des Vorderschopfes bzw. Hinterschopfes sind ortsfest positionierte Führungen hinter den Scheren vorgesehen.

Durch den notwendigen Einsatz von zwei Scheren mit allen dazugehörenden Führungen, Antrieben sowie Steuerungen entstehen sehr hohe Anlagekosten, die selbstverständlich dann auch mit hohen Betriebs- und Wartungskosten verbunden sind. darüberhinaus haben diese Anlagen auch einen großen Platzbedarf.

Der Erfindung liegt daher die Aufgabe zugrunde, eine Möglichkeit zu schaffen, mit der diese Kosten gesenkt werden können und der Platzbedarf verringert wird.

Gelöst wird diese Aufgabe durch die Patentansprüche 1 bzw. 2.

Erfindungsgemäß kommt nur eine Schere zum Einsatz, wobei diese sowohl das Abtrennen des Vorderschopfes wie auch des Hinterschopfes übernimmt. Welcher Teil abgetrennt und entsprechend abgefördert wird, bestimmt das Zusammenspiel des vor der Schere und hinter der Schere angeordneten Führungsteiles in Bezug auf die Schere bzw. die jeweilige Stellung der Ringmesser zueinander.

Dies soll nachfolgend an einem skizzierten Verfahrensablauf erläutert werden.

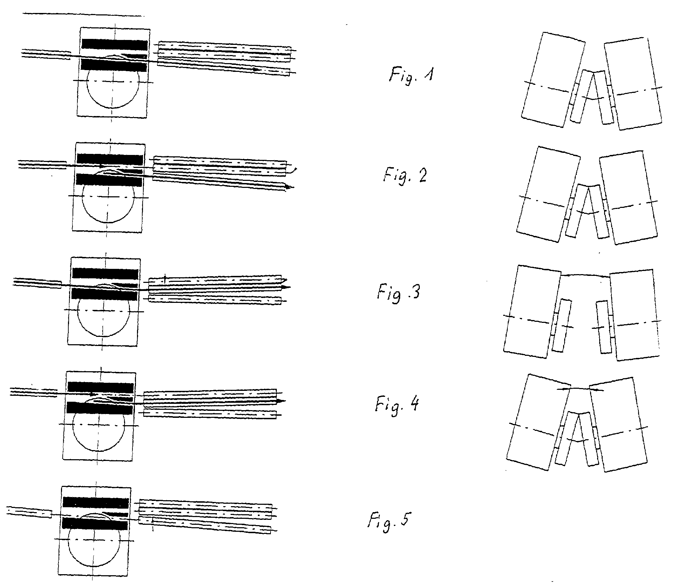

Die Figur 1 zeigt auf der rechten Seite die Ringmesser in der Schneidstellung und auf der linken Seite den Durchlauf des Walzgutanfang im freien Raum zwischen den Ringmessern. In dieser Ausgangsstellung ist das vordere Führungsteil in seiner unteren Stellung und das hintere Führungsteil in seiner oberen Endstellung. Zum Abtrennen des Vorderschopfes wird nun das vordere Führungsteil nach oben geschwenkt. Da die Ringmesser hierbei in ihrer Schnittposition stehen, erfolgt ein Abtrennen und der abgeschnittene Vorderschopf gelangt in die untere Führung des hinteren Führungsteiles (Fig.2). Während des weiteren Durchlaufs des Walzgutes wird die Schere geöffnet (Fig.3 rechtes Bild) und das vordere Führungsteil und das hintere Führungsteil schwenken synchron nach unten (Fig.3 links).

Die Schere wird dann geschlossen, so dass die Ringmesser wieder in die Schnittposition kommen und zum Abtrennen des Hinterschopfes schwenkt das vordere Führungsteil wieder nach oben (Fig.4). Der Hinterschopf wird durch die obere Führung des hinteren Führungsteiles zur Häckselschere geleitet.
Nach dem Verschwenken des vorderen Führungsteiles nach unten und entsprechenden Verschwenken des hinteren Führungsteiles nach oben ist in der Figur 5 wieder die Ausgangsposition - wie in Figur 1 - erreicht.

## Patentansprüche

1. Rotierende Schere zum Schopfen von schnelllaufendem Walzgut, insbesondere Draht, mit zwei um ihre Achse mit gleicher Drehzahl rotierenden, axial schneidenden Ringmessern, deren gegeneinander gerichtete Stirnschneidkanten beim Schnittvorgang sowohl bis auf den zum Abtrennen des Walzgutes erforderlichen Abstand zusammengeführt sind als auch auf spitzwinklig zueinander angeordneten Ebenen liegen, die sich in einer Linie schneiden, wobei das der Schere auf einer Führung mit jeweils einem fluchtend vor und hinter den Ringmessern angeordneten Führungsteil zu- und von dieser ablaufende Walzgut durch Änderung der Relativlage zwischen Walzgut und Schneidkörper entweder durch den für den schnittfreien Walzgutdurchgang freien Raum zwischen den Ringmessem oder in den durch den Greifwinkel festgelegten keilförmigen Schneidbereich der Ringmesser führbar ist, in dem sich der Schnittvorgang unter tangentialer Mitnahme des Walzgutes durch die Ringmesser vollzieht, wobei das vor den Ringmessern angeordnete Führungsteil als Weiche ausgebildet ist, in deren unterer Endstellung das Walzgut durch den freien Raum und in deren oberer Endstellung das Walzgut tangential zu den Ringmessern führbar ist,
**dadurch gekennzeichnet,**
**dass** das Führungteil hinter der Schere als heb-und senkbare 3-fach Führung ausgebildet ist, so dass wahlweise der Vorderschopf, der Hinterschopf oder das ablaufende Walzgut in einer der Führungen aufnehmbar sind, wobei das Verschwenken diese Führungsteiles in die obere bzw. untere Endstellung in Abstimmung mit dem Verschwenken des vor der Schere angeordneten Führungsteiles ausführbar ist.

2. Verfahren zum Abtrennen des Vorderschopfes und des Hinterschopfes vom laufende Walzgut mittels einer rotierende Schere nach Anspruch 1,
**gekennzeichnet durch** folgende Schritte:
- Einführen des Anfanges des laufenden Walzgutes mittels des vorderen Führungsteiles in den freien Raum zwischen den Ringmessern, wobei sich die Ringmesser in der Schnittstellung befinden und das hintere Führungsteil sich in der oberen Endstellung befindet,
- Schwenken des vorderen Führungsteiles nach oben zum Abtrennen des Vorderschopfes und Ableiten dieses in die untere Führung des hinteren Führungsteiles,
- Durchlaufen des Walzgutes oberhalb der Ringmesser in die mittlere Führung des hinteren Führungsteiles,
- Öffnen der Ringmesser und Verschwenken des vorderen Führungsteiles in die untere Endstellung während des weiteren Durchlaufens des Walzgutes, wobei synchron das hintere Führungsteil ebenfalls in die untere Endstellung schwenkt,
- Schließen der Ringmesser zur Schnittstellung und anschließendes Verschwenken des vorderen Führungsteiles nach oben zum Abtrennen des Hinterschopfes und Abführen **durch** die obere Führung des hinteren Führungsteiles,
- Verschwenken des vorderen Führungsteiles in die untere und des hinteren Führungsteiles in die obere Endstellung zur Einstellung des Ausgangszustandes.
